# EUROPÄISCHE PATENTSCHRIFT

(11) **EP 0 750 142 B1**
(45) Veröffentlichungstag und Bekanntmachung des Hinweises auf die Patenterteilung: **15.12.1999**
(21) Anmeldenummer: 96103704.1
(22) Anmeldetag: 09.03.1996
(51) Int. Cl.: F16J 15/00

(54) **Dichtungsanordnung**
Sealing arrangement
Dispositif d'étanchéité

(30) Priorität: 23.06.1995 DE 19522890
(43) Veröffentlichungstag der Anmeldung: 27.12.1996
(73) Patentinhaber: Firma Carl Freudenberg, 69469 Weinheim (DE)
(72) Erfinder: Bründt, Guido, 69517 Gorxheimertal (DE); Prem, Erich, 69502 Hemsbach (DE); Vogt, Rolf, 68723 Oftersheim (DE)

(56) Entgegenhaltungen:
- DE-A- 2 008 734
- DE-A- 2 847 279
- DE-A- 4 105 747
- US-A- 2 891 808
- US-A- 4 550 920

## Beschreibung

Die Erfindung betrifft eine Dichtungsanordnung zur Abdichtung einer Welle, umfassend eine in Richtung des abzudichtenden Raums angeordnete erste Radialwellendichtung und eine auf der dem abzudichtenden Raum abgewandten Seite der ersten Radialwellendichtung mit axialem Abstand benachbart angeordnete zweite Radialwellendichtung, wobei die erste und die zweite Radialwellendichtung als Montageeinheit zusammengefaßt und flüssigkeitsdicht sowie relativ unverdrehbar in einer Gehäusebohrung abgeordnet sind und die Welle jeweils unter radialer Vorspannung dichtend umschließen, wobei die erste Radialwellendichtung und die zweite Radialwellendichtung als separat erzeugte Radialwellendichtringe ausgebildet sind, der erste Radialwellendichtring ein im wesentlichen Z-förmiges Profil aufweist und der erste und der zweite Radialwellendichtring jeweils zumindest eine Dichtlippe aus elastomerem Werkstoff aufweisen, die an radial nach innen weisenden Ringvorsprüngen aus einem nicht kriechenden Werkstoff festgelegt sind und wobei die radial außenseitigen Axialvorsprünge an Stützringen kraft- und/oder formschlüssig miteinander verbunden sind und mit den Ringvorsprüngen, den Dichtlippen und der Welle einen im wesentlichen kreisringförmigen Raum begrenzen.

Eine solche Dichtungsanordnung ist aus der US-A-4 550 920 bekannt. Der kreisringförmige Raum, der durch die beiden Radialwellendichtringe der abzudichtenden Welle begrenzt ist, ist mit Fett gefüllt, um ein Trockenlaufen und damit eine Beschädigung der Dichtungslippen während der bestimmungsgemäßen Verwendung zu verhindern.

Eine weitere Dichtungsanordnung ist aus der DE 34 18 738 C1 bekannt. Die Dichtungsanordnung ist als Wellendichtung ausgebildet und umfaßt ein ringförmiges Dichtungselement aus polymerem Werkstoff, das mit seiner Dichffläche elastisch an die durch die Oberfläche der Welle gebildete Gegenfläche angedrückt ist. Die Dichffläche ist mit wenigstens einem hydrodynamisch wirkenden Rückförderelement für Leckflüssigkeit versehen, wobei zusätzlich zu der Dichffläche auch die Gegenfläche mit Rückförderelementen versehen ist. Die Rückförderelemente der Dichffläche und der Gegenfläche haben eine voneinander abweichende Förderwirkung. Festhaftende Anbackungen im Bereich der dynamischen Abdichtungszone treten durch eine derartige Ausgestalung nicht mehr auf. Außerdem wird durch eine gute Kühlung des im Dichtspalt enthaltenen Flüssigkeitsvolumens die Bildung von Ölkohle zuverlässig vermieden.

Der Erfindung liegt die Aufgabe zugrunde, eine Dichtungsanordnung der vorbekannten Art derart weiterzuentwickeln, daß Leckflüssigkeit, die vom abzudichtenden Raum an der ersten Radialwellendichtung vorbei in Richtung der zweiten Radialwellendichtung austritt, während der gesamten Gebrauchsdauer der Dichtungsanordnung innerhalb derselben zurückgehalten und gespeichert wird.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, daß der zweite Radialwellendichtring ein axial in Richtung des abzudichtenden Raums offenes, im wesentlichen C-förmiges Profil aufweist, daß die Ringvorsprünge Bestandteile von im wesentlichen L-förmigen Stützringen sind, daß der von den Axialvorsprüngen, den Ringvorsprüngen, den Dichtlippen und der Welle gebildete Raum als Speicherraum zur Aufnahme von Leckflüssigkeit ausgebildet ist und ein Speichervolumen aufweist, das 0,1 bis 0,5 1 beträgt und daß der erste Radialwellendichtring nur eine axial in Richtung des abzudichtenden Raums umgeformte Dichtlippe aufweist, die von einander durchschneidenden Kegelflächen begrenzt ist und die Welle mit einer sinusförmigen Berührungslinie umfangsseitig dichtend umschließt.

Hierbei ist von Vorteil, daß Leckflüssigkeit, die betriebsbedingt aus dem abzudichtenden Raum an der Dichtlippe des ersten Radialwellenrings vorbei in Richtung des zweiten Radialwellenrings austritt, im Speicherraum aufgenommen wird.

Die Größe des Speicherraums ist dabei so bemessen, daß die gesamte, während der Gebrauchsdauer der Dichtungsanordnung in den Speicherraum eintretende Leckflüssigkeit aufgenommen und gespeichert wird. Die Dichtlippen von beiden Radialwellendichtringen sind in Richtung des abzudichtenden Raums angeordnet und einander in einer funktionstechnischen Reihenschaltung zugeordnet. Die Dichtlippe des ersten Radialwellendichtrings ist als Vorschaltdichtung bezogen auf die Dichtlippe des zweiten Radialwellendichtrings ausgebildet. Im neuen Zustand hält zunächst nur der erste Radialwellendichtring das abzudichtende Medium innerhalb des abzudichtenden Raums zurück. Mit zunehmender Gebrauchsdauer der Dichtungsanordnung läßt die Dichtwirkung der ersten Dichtlippe durch abrasiven Verschleiß allmählich etwas nach. Die relativ verschlechterte Dichtwirkung im Laufe der Gebrauchsdauer kann beispielsweise auf im abzudichtenden Medium befindliche Schwebekörper zurückzuführen sein, die die Dichtlippe des ersten Radialwellendichtrings angreifen.

Gemäß einer vorteilhaften Ausgestaltung kann der Speicherraum einen im wesentlichen rechteckigen Querschnitt aufweisen und ein Speichervolumen aufweisen, das wenigstens dem Volumen der betriebsbedingt zu erwartenden Leckage, die aus dem abzudichtenden Raum an dem ersten Radialwellendichtring vorbei in Richtung des zweiten Radialwellendichtrings austritt, entspricht. Für die meisten Anwendungsfälle hat es sich als vorteilhaft bewährt, wenn das Speichervolumen 0,1 bis 0,5, bevorzugt 0,2 bis 0,35 l beträgt. Hierbei ist von Vorteil, daß ein derart bemessenes Speichervolumen für die meisten Anwendungsfälle einen guten Kompromiß zwischen kompakten Abmessungen der Dichtungsanordnung in axialer und radialer Richtung und einer ausgezeichneten Abdichtung während der gesamten Betriebsdauer bedingt.

Der erste Radialwellendichtring weist nur eine axial in Richtung des abzudichtenden Raums umgeformte Dichtlippe auf, die von einander durchschneidenden Kegelflächen begrenzt ist und die Welle mit einer sinusförmigen Berührungslinie umfangsseitig dichtend umschließt. Die Dichtlippe kann sowohl durch ihre Eigenelastizität und den Druck innerhalb des abzudichtenden Raums, als auch nach einer anderen Ausgestaltung durch eine Ringwendelfeder in radialer Richtung an die Oberfläche der Welle dichtend angepreßt sein. Die einander durchschneidenden Kegelflächen, wobei die dem abzudichtenden Medium zugewandte Kegelfläche einen größeren Winkel mit der Oberfläche der Welle einschließt, als die axial in Richtung des zweiten Radialwellendichtrings angeordnete Kegelfläche, und die sinusförmige Berührungslinie bewirken eine ausgezeichnete Schmierung der Dichtlippe mit abzudichtendem Medium und einen Rückfördereffekt in Richtung des abzudichtenden Raums.

Um den abrasiven Verschleiß der ersten Dichtlippe während der gesamten Gebrauchsdauer möglichst gering zu halten und um nahezu gleichbleibende Gebrauchseigenschaften während der gesamten Gebrauchsdauer der Dichtungsanordnung sicherzustellen, ist es vorgesehen, daß die spezifische Anpressung der Dichtlippe des ersten Radialwellendichtrings an die Welle höchstens 90 N/m beträgt. Eine spezifische Anpressung von 90 N pro Meter Umfang ist außerordentlich wenig. Der abrasive Verschleiß ist dadurch auf ein Minimum begrenzt. Eine derartige vorteilhafte Ausgestaltung ist möglich, da die die erste Dichtlippe passierende Leckflüssigkeit innerhalb des Speicherraums gespeichert und bedarfsweise durch den zweiten Radialwellendichtring gegenüber der Umgebung abgedichtet wird. Die erfindungsgemäße Dichtungsanordnung weist daher eine lange Gebrauchsdauer mit gleichbleibend guten Gebrauchseigenschaften auf.

In axialer Richtung beiderseits der Dichtlippe des ersten Radialwellendichtrings kann jeweils ein sich in axialer Richtung erstreckender Dichtspalt von kapillaraktiver Enge vorgesehen sein, wobei das Verhältnis von axialer Breite zu radialer Höhe eines jeden Dichtspalts 1 bis 10, bevorzugt 4 bis 8 beträgt. Hierbei ist von Vorteil, daß eine gute statische Abdichtung bei nicht umlaufender Welle sichergestellt ist. Wird die Welle im Anschluß an ihren Stillstand in eine Drehbewegung versetzt, bewirkt die Dichtlippe des ersten Radialwellendichtrings durch ihre Förderwirkung in Richtung des abzudichtenden Raums eine Verlagerung der Flüssigkeitsbestandteile aus den Dichtspalten axial in Richtung des abzudichtenden Raums.

Der Dichtlippe des zweiten Radialwellendichtrings kann auf der dem abzudichtenden Raum abgewandten Seite eine Staubdichtung nachgeschaltet sein, wobei die Dichtlippe und die Staubdichtung einstückig ineinander übergehend und materialeinheitlich ausgebildet sind. Zur Schmierung der Dichtlippe des zweiten Radialwellendichtrings und der Staubdichtung sowie als zusätzliche Durchtrittssperre für das abzudichtende Medium kann es vorgesehen sein, daß der Ringraum zwischen der Staubdichtung und der Dichtlippe mit einer Fettfüllung versehen ist. Eine ausreichende Schmierung der Dichtlippe ist dadurch auch dann sichergestellt, wenn kein abzudichtendes Medium durch den Speicherraum entlang der Welle in Richtung des zweiten Radialwellendichtrings vordringt.

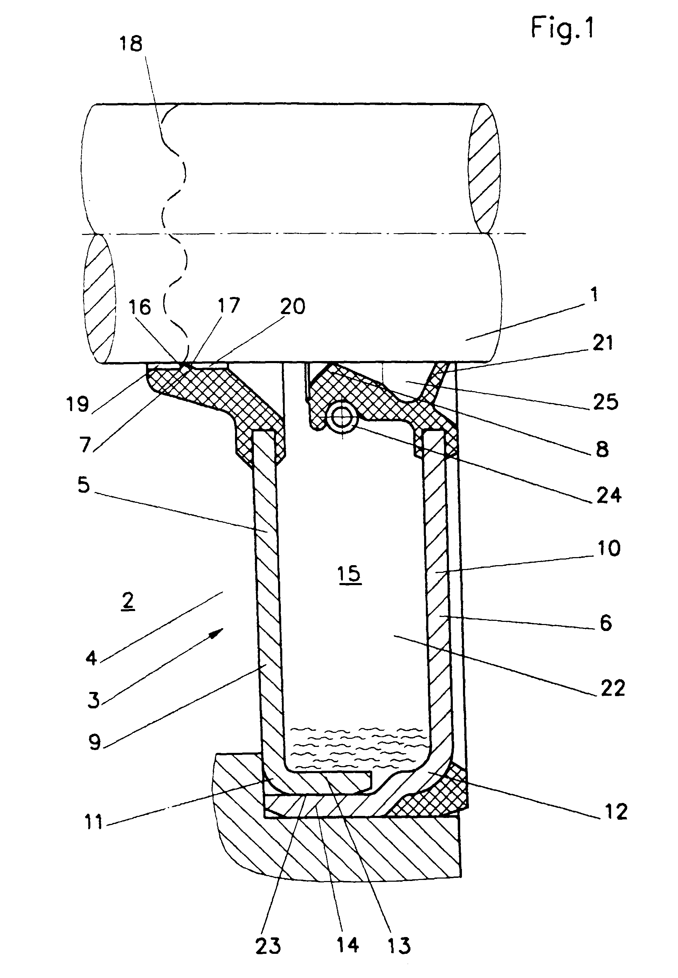

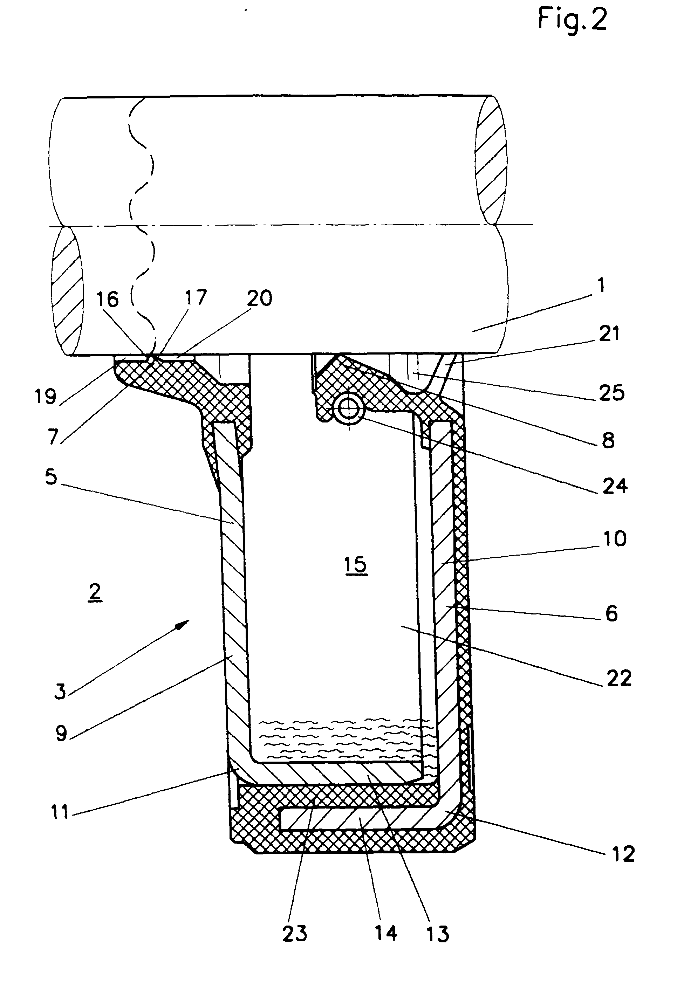

Zwei Ausführungsbeispiele der erfindungsgemäßen Dichtungsanordnung sind in den Zeichnungen Fig. 1 und 2 dargestellt und werden nachfolgend erläutert.

In Fig. 1 ist eine Dichtungsanordnung gezeigt, die als Montageeinheit 3 ausgebildet und in eine Gehäusebohrung 4 eingepreßt ist, wobei das Gehäuse den Axialvorsprung 14 des zweiten Radialwellendichtrings 6 dichtend umschließt. Die Montageeinheit 3 umfaßt einen ersten und eine zweiten Radialwellendichtring 5, 6, deren Dichtlippen 7, 8 einander in einer funktionstechnischen Reihenschaltung zugeordnet sind. Die Axialvorsprünge 13, 14 der Stützringe 11, 12 sind miteinander verpreßt, wobei zwischen dem Innenumfang des Axialvorsprungs 13 und dem Außenumfang des Axialvorsprungs 14 ein folienartiger Dichtlack 23 vorgesehen ist. Die Dichtlippe 7 des ersten Radialwellendichtrings 5 ist in axialer Richtung sinusförmig ausgebildet und umschließt den Außenumfang der Welle 1 dichtend. Der zweite Radialwellendichtring 6 umfaßt eine Dichtlippe 8, die durch eine Ringwendelfeder 24 an die Oberfläche der Welle 1 angedrückt ist. Auf der dem ersten Radialwellendichtring 5 abgewandten Seite der Dichtlippe 6 ist eine Staubdichtung 21 vorgesehen, wobei der Ringraum 25 zwischen der Dichtlippe 6 und der Staubdichtung 21 mit einem Sperrfett befüllt ist. Die Ringvorsprünge 9, 10 der Stützringe 11, 12 von erstem und zweitem Radialwellendichtring 5, 6, die Axialvorsprünge 13, 14, die Dichtlippen 7, 8 sowie die Oberfläche der Welle 1 begrenzen den Speicherraum 15, der in diesem Falle ein Speichervolumen 22 von 0,325 l aufweist. Die Lippe 7 des ersten Radialwellendichtrings 5 umschließt die Oberfläche der abzudichtenden Welle 1 mit einer sinusförmigen Berührungslinie 18 um eine Rückförderwirkung des abzudichtenden Mediums in Richtung des abzudichtenden Raums 2 zu gewährleisten. Um eine einwandfreie statische Abdichtung bei einer relativ zum Gehäuse stillstehenden Welle 1 zu erzielen, sind die Dichtspalte 19, 20 axial beiderseits der durch die Kegelfläche 16, 17 begrenzten Dichtlippe 7 von kapillaraktiver Enge. Die die Dichtlippe 7 des ersten Radialwellendichtrings 5 passierende Leckage sammelt sich im Laufe der Gebrauchsdauer innerhalb des Speicherraums 15.

In Fig. 2 ist ein zweites Ausführungsbeispiel gezeigt, das sich vom Ausführungsbeispiel aus Fig. 1 dadurch unterscheidet, daß zwischen dem Innenraum des Axialvorsprungs 13 und dem Außenumfang des Axialvorsprungs 14 anstelle des folienartigen Dichtlacks eine Haftsitz aus elastomerem Werkstoff vorgesehen ist, der den Axialvorsprung 14 vollständig umschließt.

## Patentansprüche

1. Dichtungsanordnung zur Abdichtung einer Welle (1), umfassend eine in Richtung des abzudichtenden Raums (2) angeordnete erste Radialwellendichtung und eine auf der dem abzudichtenden Raum abgewandten Seite der ersten Radialwellendichtung mit axialem Abstand benachbart angeordnete zweite Radialwellendichtung, wobei die erste und die zweite Radialwellendichtung als Montageeinheit (3) zusammengefaßt und flüssigkeitsdicht sowie relativ unverdrehbar in einer Gehäusebohrung (4) abgeordnet sind und die Welle (1) jeweils unter radialer Vorspannung dichtend umschließen, wobei die erste Radialwellendichtung und die zweite Radialwellendichtung als separat erzeugte Radialwellendichtringe (5, 6) ausgebildet sind, der erste Radialwellendichtring (5) ein im wesentlichen Z-förmiges Profil aufweist und der erste (5) und der zweite Radialwellendichtring (6) jeweils zumindest eine Dichtlippe (7, 8) aus elastomerem Werkstoff aufweisen, die an radial nach innen weisenden Ringvorsprüngen (9, 10) aus einem nicht kriechenden Werkstoff festgelegt sind und wobei die radial außenseitigen Axialvorsprünge (13, 14) an Stützringen (11, 12) kraft- und/oder formschlüssig miteinander verbunden sind und mit den Ringvorsprüngen (9, 10), den Dichtlippen (7, 8) und der Welle (1) einen im wesentlichen kreisringförmigen Raum begrenzen, dadurch gekennzeichnet, daß der zweite Radialwellendichtring (6) ein axial in Richtung des abzudichtenden Raums (2) offenes, im wesentlichen C-förmiges Profil aufweist, daß die Ringvorsprünge (9, 10) Bestandteile von im wesentlichen L-förmigen Stützringen (11, 12) sind, daß der von den Axialvorsprüngen (13, 14), den Ringvorsprüngen (9, 10), den Dichtlippen (7, 8) und der Welle (1) gebildete Raum als Speicherraum (15) zur Aufnahme von Leckflüssigkeit ausgebildet ist und ein Speichervolumen (22) aufweist, das 0,1 bis 0,5 1 beträgt und daß der erste Radialwellendichtring (5) nur eine axial in Richtung des abzudichtenden Raums (2) umgeformte Dichtlippe (7) aufweist, die von einander durchschneidenden Kegelflächen (16, 17) begrenzt ist und die Welle (1) mit einer sinusförmigen Berührungslinie (18) umfangsseitig dichtend umschließt.

2. Dichtungsanordnung nach Anspruch 1, dadurch gekennzeichnet, daß die spezifische Anpressung der Dichtlippe (7) des ersten Radialwellendichtrings (5) an die Welle (1) höchstens 90 N m⁻¹ beträgt.

3. Dichtungsanordnung nach einem der Ansprüche 1 oder 2, dadurch gekennzeichnet, daß in axialer Richtung beiderseits der Dichtlippe (7) des ersten Radialwellendichtrings (5) ein sich in axialer Richtung erstreckender Dichtspalt (19, 20) von kapillaraktiver Enge vorgesehen ist und daß das Verhältnis von axialer Breite zu radialer Höhe eines jeden Dichtspalts (19, 20) 1 bis 10 beträgt.

4. Dichtungsanordnung nach einem der Ansprüche 1 bis 3, dadurch gekennzeichnet, daß der Dichtlippe (8) des zweiten Radialwellendichtrings (6) auf der dem abzudichtenden Raum (2) abgewandten Seite eine Staubdichtung (21) nachgeschaltet ist und daß die Dichtlippe (8) und die Staubdichung (21) einstückig ineinander übergehend und materialeinheitlich ausgebildet sind.

## Claims

1. A sealing arrangement for sealing off a shaft (1), comprising a first radial shaft seal arranged in the direction of the space (2) to be sealed off and a second radial shaft seal arranged on that side of the first radial shaft seal facing away from the space to be sealed off, so as to be adjacent to and at an axial distance from the said first radial shaft seal, the first and second radial shaft seals being combined as an assembly unit (3) and being arranged in a liquid-tight manner, as well as non-rotatable relative to one another, in a housing bore (4) and each sealingly surrounding the shaft (1) under radial prestress, the first radial shaft seal and the second radial shaft seal being designed as separately produced radial shaft sealing rings (5, 6), the first radial shaft sealing ring (5) having an essentially Z-shaped profile, and the first (5) and the second (6) radial shaft sealing ring each having at least one sealing lip (7, 8) made of elastomeric material, the said sealing lips being fixed to radially inward-pointing annular projections (9, 10) made of a non-creep material, and the radially outer axial projections (13, 14) being non-positively and/or positively connected to one another on supporting rings (11, 12) and delimiting with the annular projections (9, 10), the sealing lips (7, 8) and the shaft (1) an essentially annular space, characterized in that the second radial shaft sealing ring (6) has an essentially C-shaped profile open axially in the direction of the space (2) to be sealed off, in that the annular projections (9, 10) are integral parts of essentially L-shaped supporting rings (11, 12), in that the space formed by the axial projections (13, 14), the annular projections (9, 10), the sealing lips (7, 8) and the shaft (1) is designed as a storage space (15) for receiving leakage fluid and has a storage volume (22) which amounts to 0.1 to 0.5 l, and in that the first radial shaft sealing ring (5) has only one sealing lip (7) which is shaped axially in the direction of the space (2) to be sealed off and which is delimited by conical surfaces (16, 17) intersecting one another and sealingly surrounds the shaft (1) circumferentially with a sinusoidal contact line (18).

2. A sealing arrangement according to claim 1, characterized in that the specific contact pressure of the sealing lip (7) of the first radial shaft sealing ring (5) on the shaft (1) is at most 90 Nm⁻¹.

3. A sealing arrangement according to either of claims 1 and 2, characterized in that an axially extending sealing gap (19, 20) with a narrowness having capillary action is provided in the axial direction on both sides of the sealing lip (7) of the first radial shaft sealing ring (5), and in that the ratio of axial width to radial height of each sealing gap (19, 20) is 1 to 10.

4. A sealing arrangement according to any one of claims 1 to 3, characterized in that the sealing lip (8) of the second radial shaft sealing ring (6) is followed, on the side facing away form the space (2) to be sealed off, by a dust seal (21), and in that the sealing lip (8) and the dust seal (21) are designed to merge into one another in one piece and to be of uniform material.

## Revendications

1. Dispositif d'étanchéité pour l'étanchéification d'un arbre (1), comprenant un premier joint d'étanchéité à lèvre radiale situé en direction de l'espace (2) à étanchéifier et un second joint d'étanchéité à lèvre radiale situé sur le côté du premier joint d'étanchéité à lèvre radiale éloigné de l'espace à étanchéifier de manière contiguë et à une distance axiale de celui-ci, les premier et second joints d'étanchéité à lèvre radiale étant assemblés en tant qu'unité de montage (3) et situés dans un alésage (4) de carter d'une manière étanche aux liquides et ne permettant pas de rotation relative et entourant l'arbre (1) de manière étanche sous l'effet, à chaque fois, d'une précontrainte radiale, le premier joint d'étanchéité à lèvre radiale et le second joint d'étanchéité à lèvre radiale étant exécutés en tant qu'anneaux d'étanchéité à lèvre radiale (5, 6) produits séparément, le premier anneau d'étanchéité à lèvre radiale (5) ayant un profil essentiellement en forme de Z et les premier (5) et second (6) anneaux d'étanchéité à lèvre radiale ayant chacun au moins une lèvre d'étanchéité (7, 8) en matière élastomère, lesquelles lèvres d'étanchéité sont fixées sur des saillies annulaires (9, 10) dirigées radialement vers l'intérieur et formées d'un matériau qui ne subit pas de fluage, et les saillies axiales (13, 14) situées sur le côté extérieur dans le sens radial étant reliées l'une à l'autre de manière à pouvoir transmettre une force et/ou par conjugaison de forme au niveau de bagues d'appui (11, 12) et limitant, avec les saillies annulaires (9, 10), les lèvres d'étanchéité (7, 8) et l'arbre (1), un espace ayant essentiellement la forme d'une couronne, caractérisé en ce que le second anneau d'étanchéité à lèvre radiale (6) a un profil essentiellement en forme de C ouvert axialement en direction de l'espace (2) à étanchéifier, en ce que les saillies annulaires (9, 10) font partie de bagues d'appui (11, 12) ayant essentiellement la forme d'un L, en ce que l'espace formé par les saillies axiales (13, 14), les saillies annulaires (9, 10), les lèvres d'étanchéité (7, 8) et l'arbre (1) est exécuté en tant qu'espace de stockage (15) destiné à recevoir les fuites de liquide et a un volume de stockage (22) de 0,1 à 0,5 l, et en ce que le premier anneau d'étanchéité à lèvre radiale (5) est pourvu d'une seule lèvre d'étanchéité (7) déformée axialement en direction de l'espace (2) à étanchéifier, qui est limitée par des surfaces coniques (16, 17) se coupant et entoure l'arbre (1) de manière étanche sur le côté de sa circonférence avec une ligne de contact (18) sinusoïdale.

2. Dispositif d'étanchéité selon la revendication 1, caractérisé en ce que la pression spécifique de la lèvre d'étanchéité (7) du premier anneau d'étanchéité à lèvre radiale (5) sur l'arbre (1) mesure au maximum 90 N m⁻¹.

3. Dispositif d'étanchéité selon l'une des revendications 1 ou 2, caractérisé en ce que l'on prévoit, sur les deux côtés de la lèvre d'étanchéité (7) du premier anneau d'étanchéité à lèvre radiale (5) dans la direction axiale, une fente d'étanchéité (19, 20) s'étendant dans la direction axiale et dont l'étroitesse cause une action capillaire, et en ce que le rapport entre la largeur axiale et la hauteur radiale de chaque fente d'étanchéité (19, 20) va de 1 à 10.

4. Dispositif d'étanchéité selon l'une des revendications 1 à 3, caractérisé en ce qu'un joint étanche à la poussière (21) est situé après la lèvre d'étanchéité (8) du second anneau d'étanchéité à lèvre radiale (6), sur le côté éloigné de l'espace (2) à étanchéifier, et en ce que la lèvre d'étanchéité (8) et le joint étanche à la poussière (21) sont formés d'un même matériau et exécutés de manière à se confondre.
